# EUROPEAN PATENT APPLICATION

(11) **EP 3 533 822 A1**
(43) Date of publication of application: **04.09.2019**
(21) Application number: 17863718.7
(22) Date of filing: 27.10.2017
(51) Int. Cl.: C08J 7/00, C08J 3/07, C08J 3/12

(54) **METHOD FOR ACTIVATING THE SURFACE OF POLYMER MATERIALS**

(30) Priority: 31.10.2016 BR 102016254485
(71) Applicant: Fundação Oswaldo Cruz, 21045-900 Rio de Janeiro, RJ (BR); Instituto de Biologia Molecular do Paraná - IBPM, 20090-080 Curitiba (BR); Universidade Federal Do Paraná, Curitiba - PR (BR)
(72) Inventor: SAUL, Cyro Ketzer, Curitiba Paraná (BR); SIONEK, André, Curitiba Paraná (BR); FOTI, Leonardo, Curitiba Paraná (BR); KRIEGER, Marco, Aurélio, Curitiba Paraná (BR); DO AMARAL, Luiz, Eduardo, Nishino, Gomes, Curitiba Paraná (BR)
(74) Representative: AWA Denmark A/S
(86) International application number: PCT/BR2017/050326
(87) International publication number: WO 2018/076092

(57) **Abstract**

The present invention describes a method for chemically and / or biologically activating the surface of originally inert polymeric materials. Activation of the polymer surface occurs by the physical incorporation of at least one linear long chain compound by the inert polymer in the presence of a solvent.

## Description

### FIELD OF THE INVENTION

The present invention relates to the transformation of chemically inert hydrophobic polymer surfaces into chemically / biologically active surfaces by the physical incorporation of at least one long chain linear organic compound containing at least one reactive terminus in the presence of at least one solvent.

### BACKGROUND OF THE INVENTION

Polymers are materials that have numerous applications. One possible application relates to its use in analyzing biological and chemical samples.

In biological analyzis, the polymeric material may be employed in the use of *in vitro diagnostics,* i.e., diagnosis conducted outside the human body, in order to obtain information on physiological states, health conditions or congenital anomalies.

In chemical analyzis, the polymeric material can be useful in the detection of chemical compounds with potential application in industrial and environmental monitoring of pollutants or in the extraction of contaminants such as heavy metals in aqueous medium.

However, the simpler the polymer chain, the lower its reactivity. Therefore, it is necessary to modify the surfaces of the polymers in order to make them chemically and biologically active and, consequently, suitable for the intended use. This modification through the introduction of new radicals in the polymer chains allows the formation of polymers with different physicochemical properties.

Documents relating to the modification of the structure of materials, including polymeric materials, are known in the art. The paper by HF Hildebrand, N. Blanchemain, G. Mayer, F. Chai, M.

Lefebvre, F. Boschin "Surface coatings for biological activation and functionalization of medical devices" (Surface & Coatings Technology 200 (2006) 6318-6324 - D01: 10.1016/j.surfcoat.2005.11.086) reports techniques to modify surfaces of materials in order to take them biologically active. The modification may be mechanical, physical, chemical or biological. This document mentions that physical modification may occur through oxidative processes, such as passivation of metals and alloys, by coating surfaces causing protection or activation, as well as other forms such as chemical vapor deposition, gelation deposition, hydrothermal treatment and polyelectrolyte films.

WO 2007/032587 document discloses the production of adhesive particles which act both as a solid support for the attachment of biomolecules and as adhesives adhering to the surface of a "biochip". The method of preparing the adhesive particles comprises the emulsifying of a hydrophilic monomer, a major monomer and a comonomer in an aqueous medium, followed by the polymerization reaction in aqueous medium. Therefore, the copolymerization reaction involves an inert polymer and a hydrophilic polymer with the OH-terminus (usually COOH). However, the method employed in this document is very complex and costly, in addition to being quite limited with respect to the availability of incorporable OH-terminated polymers, since the copolymerized polymers have a distinct hydrophilic / hydrophobic character and are therefore incompatible.

WO 2009/018484 document discloses a coating of non-biological substrate surfaces, wherein the coating composition consists of a drug delivery vehicle coupled either directly or via a linker to a peptide. Said drug delivery vehicle is a polymer, such as polystyrene. It is further said that the peptide binding and the surface of the drug delivery vehicle may be covalent or noncovalent. The document also encompasses the use of a compound or linker that assists in the coupling of at least two different molecules, for example, in the coupling of a peptide to the delivery vehicle. Such compounds / linkers may be fatty acids, including oleic acid.

Although the modification of surfaces of polymeric materials by means of various methods is already known in order to take them chemically and / or biologically active, the state of the art still lacks a solution that allows it to obtain activated surfaces in different types of structures and in a simpler and less costly way.

As will be better described below, the present invention provides a solution to the above-described problems of the prior art in a practical and efficient manner.

### SUMMARY OF THE INVENTION

The present invention relates to a controlled method that allows the chemical / biological activation of the surface of polymeric rests by physically incorporating long chain linear organic compounds into inert hydrophobic polymers during the evaporation of the solvent employed.

Only physical processes of solubilization, emulsification and evaporation are part of the method claimed in the present invention.

The long chain linear organic compounds suitable for the invention have an inert hydrophobic terminus (5a) and at least one reactive terminus (5b), the latter being hydrophilic or not.

The method of the present invention allows an easy adjustment of the incorporation of the reactive terminus (5b) by a simple control of the amount of linear long chain organic compound added to the process.

### SHORT FIGURES DESCRIPTION

The description given below makes reference to the attached figures, which:

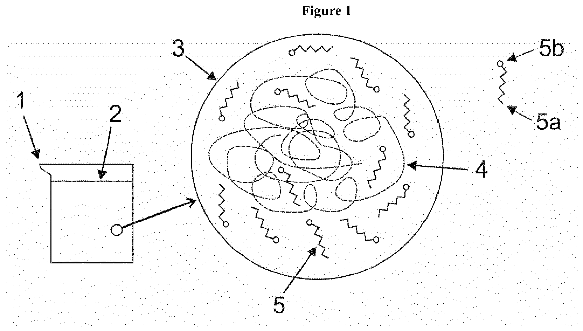

Figure 1 shows a schematic representation of the solution (2) in a vessel (1) containing the mixture of interest. In (3) the mixture of interest containing the inert hydrophobic polymer (4) and the long chain organic compound (5) can be seen sub-microscopically. The detailing of the long chain linear compound (5) illustrates its hydrophobic inert termination (5a) and its reactive termination (5b).
Figure 2 shows a schematic representation of the activated surface structures, which may be of three possible configurations, obtained by employing the present invention.

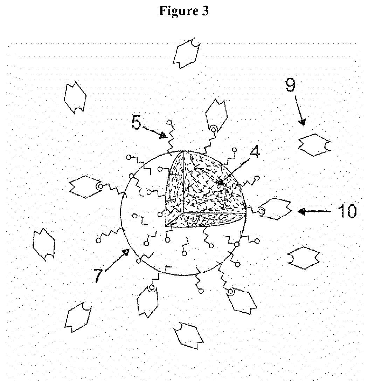

Figure 3 shows a schematic diagram of any solution containing active surface particles (7) containing reactive termini (5b) of the linear long chain organic compound (5) available on its surface as well as biological / chemical species, dispersed in the solution (9) or chemically bonded to the reactive ends available on the surface of the structure (10).
Figure 4 shows absorption spectra obtained by infrared spectroscopy using Fourier Transform (FTIR) obtained by the Total Attenuated Reflection (ATR) technique of structures with activated surface after storage for 1 (one) year.
Figure 5 shows sets of microspheres employing the claimed method.

### DETAILED DESCRIPTION OF THE INVENTION

The present invention relates to a method for chemically and / or biologically activating the surface of originally inert polymeric materials. Activation of the polymer surface occurs by the physical incorporation of at least one linear long chain compound by the inert polymer in the presence of a solvent.

Polymeric materials suitable for the method of the present invention comprise hydrophobic polymers which may be pure or in combination with each other, such as, for example, polystyrene or any other polymer which is soluble in the same solvent as the long chain linear organic compound to be embedded on its surface, such as polyamides, or acrylic or vinyl polymers. In addition, such polymeric materials may be structured in the form of films, particulates or filaments.

The linear long chain organic compound (5) to be physically incorporated into the inert polymer (4) must have a hydrophobic inert termination (5a) with high affinity for the polymer and at least one reactive terminus (5b), be hydrophilic or not.

In a preferred condition of the method of the present invention, the inert hydrophobic termination of the linear organic compound (5a) has C-H bonds or organic radicals containing such bonds. The reactive terminus (5b) preferably has one or more hydroxyl (OH), carboxyl (COOH), thiol (SH), amine (NH₂), amide (NH2O), halogen or combinations thereof.

More particularly, long chain linear organic compounds may comprise: long chain oily acids (such as, preferably, oleic acid), linear alkanes with diverse halogen terminations (such as 1-bromotridecane), linear alkanes with thiol termination, also known as mercaptans (such as dodecyl mercaptan), linear alkanes with amine terminations (such as dodecylamine), linear alkanes with amide terminations (such as dodecanamide), linear alkanes
with epoxy terminations (1,2 epoxy-hexadecane), various fatty alcohols (such as dodecanol), as well as being able to understand other long-chain compounds that meet the established requirements.

More specifically, long chain linear organic compounds may comprise compounds selected from the group consisting of oleic acid, 2-amino octanoic acid, anacardic acid, benzenopentanoic acid, benzenopentanol, bromooctane, 1-bromo-decane, 2-bromo-decanoic acid, 1-bromoheptadecane, 1-bromohexadecane, 1-bromooctadecane, 1-bromo-pentadecane, 1-bromo-tetradecane, 1-bromo-tridecane, decanethiol, 1-decylamine, dodecanoyl, dodecanoyl, dodecanamide, 1-dodecanethiol, 1-dodecanol, 1-fluoro-decane, 1-iodo-decane, 1-iodo-docecane or 1-iodohexadecane.

The preferred solvent of the present invention is chloroform. However, one or more solvents comprised of ethanol, diethyl ether, petroleum ether, dimethylformamide, benzene, acetic acid, dimethylsulfoxide and carbon tetrachloride may be employed, depending on the linear long chain compound employed. Water may also be employed as the solvent depending on the long chain compound.

Table 1 shows the possible long chain linear organic compounds with their respective suitable solvents.

**Table 1: Possible long chain linear organic compounds and their suitable solvents.**

| **Long chain linear organic compound** | **Suitable Solvents** |
|---|---|
| Oleic Acid | chloroform |
| 2-Amino-octanoic acid | water, ethanol, diethyl ether, benzene, acetic acid |
| Anacardic acid | diethyl ether, ethanol, dimethylsulfoxide, petroleum ether, dimethylformamide |
| Benzenopentanoic acid | water, ethanol and other organic solvents |
| B enzymeopentanol | diethyl ether, ethanol |
| Bromo-octane | chloroform |
| 1-Bromo-decane | diethyl ether, chloroform, carbon tetrachloride |
| 2-Bromo-decanoic acid | diethyl ether |
| 1-Bromoheptadecane | chloroform |
| 1-Bromohexadecane | diethyl ether and chloroform |
| 1-Bromooctadecane | ethanol, diethyl ether, carbon tetrachloride |
| 1-Bromo-pentadecane | ethanol, benzene, chloroform, carbon tetrachloride, diethyl ether |
| 1-Bromo-tetradecane | acetone, benzene, ethanol |
| 1-Bromo-tridecane | chloroform |
| Decanotiol | ethanol, diethyl ether |
| 1-Decylamine | water, ethanol, diethyl ether, acetone, benzene, chloroform |
| dodecanoyl chloride | diethyl ether |
| dodecylamine | water, ethanol, diethyl ether, benzene, chloroform |
| dodecanamide | ethanol, acetone, carbon tetrachloride, diethyl ether, benzene |
| 1-Dodecanethiol | ethanol, diethyl ether, chloroform |
| 1-Dodecanol | ethanol, diethyl ether, benzene |
| 1-Fluor-Dean | diethyl ether |
| 1-Iodo-decane | ethanol, diethyl ether, carbon tetrachloride |
| 1-Iodo-docecane | ethanol, methanol, diethyl ether, acetone, carbon tetrachloride |
| 1-Iodohexadecane | water, ethanol, diethyl ether, acetone, benzene, chloroform |

Preferably, inorganic nanoparticles of metal ions are employed in order to take ferromagnetic polymer structures, such as particulates, filaments and films. Ferromagnetism is fundamental for the removal of the polymeric structures with the activated surface after the process of capture of active species. Preferred inorganic nanoparticles are iron (II or III) oxide nanoparticles.

The preparation of the polymeric films, such as particulates, films or filaments, may be carried out by employing techniques already available in the prior art.

The method of obtaining such polymeric resins with the activated surface for chemical and biological applications begins with the solubilization of the inert hydrophobic polymer and the linear organic compound
in a solvent capable of solubilizing both, and may also contain magnetic nanoparticles. After this solubilization process, an organic solution is formed. The proportions of the components in the organic solution usually range from 5-15% of the inert hydrophobic polymer, 0.1-1% of the linear long chain organic compound and 94.9-84% solvent.

Said organic solution is emulsified with the aid of an emulsification solution, consisting of a second solvent immiscible with the organic solvent, usually water, optionally in the presence of polyvinyl alcohol or any other emulsion stabilizer available in the state of the such as polysorbate 20, cetearide 20 and stearyl alcohol. Polyvinyl alcohol may be employed in the present method both as an emulsion stabilizer and as a dispersant of inorganic metal ion nanoparticles. It is emphasized that if inorganic nanoparticles of metal ions are used, the use of polyvinyl alcohol becomes mandatory. By exclusively fulfilling the function of emulsion stabilizer, its use is optional, in which case not only polyvinyl alcohol may be used as any other stabilizer available in the state of the art.

The emulsion solution should have a mass of approximately 50 times the mass of the organic solution to enable the droplets to spread and prevent their coalescence.

Typically, these components are cold emulsified using a conventional stirrer. However, if magnetic nanoparticles are used to produce magnetic polymeric structures, mixing is carried out with an ultrasonic agitator, since the magnetic field of the conventional agitator would agglomerate the magnetic nanoparticles.

Said organic solution is then emulsified into an
agitator with the aid of the emulsification solution. The emulsion is then formed by forced agitation, with shear rate in the range of 6 m / s, of the mixed organic solution in the emulsion solution.

The emulsification step occurs in a temperature range of 35°C to at least 10°C lower than the lower boiling temperature of the emulsion components, to avoid the formation of boiling bubbles which would destroy the emulsion, and lasts between 20 to 40 minutes. Usually, the temperature range of this step ranges from 35°C to 70°C.

During this step, the solvent is evaporated to allow physical entrapment of the inert hydrophobic terminus (5a) in the tangled structure of the inert polymer. Upon completion of these structures, the final structure should ideally be washed with deionized water at least once for the removal of the unrestrained long chain linear compound on the surface thereof.

The incorporation of at least one long chain linear compound by the inert polymer occurs exclusively by physical entrapment (entanglement) of the inert hydrophobic terminus (5a) of the long chain linear organic compound in the tangled structure of the polymer which will constitute the matrix of the structures during the solvent evaporation process. Upon evaporation of the solvent, the molecular chain of the inert polymer, once swollen by the solvent, allows the molecules of the long chain linear organic compound to penetrate its structure.

Said entrapment occurs due to a chemical affinity between the inert hydrophobic terminus (5a) and the originally inert hydrophobic polymer. The reactive termination (5b) is preferably exposed and directed towards the outside of the polymer surface. Thus, the reactive terminations present on the surface of the polymer
make up the active portion of the structure, allowing binding with chemical and / or biological compounds compatible with the new active surface.

Films with the modified surface may be obtained by means of casting, dip coating, spin-coating, extrusion, blown extrusion, spray coating and any other processes available in the state of the art capable of producing films. In these cases of film production, the mass / volume fraction of the inert hydrophobic polymer in relation to the organic solvent defines the rheological properties of the solution making it possible to obtain thinner or thicker films and, in some processes, enables the formation of discontinuous films. Further, the boiling temperature / vapor pressure of the solvent associated with the temperature of the film forming process can determine the formation of solid or porous films.

Filaments with activated surface may be obtained by electrospinning, spray drying, extrusion and any other state of the art processes capable of producing filaments. In these cases of filament production, the mass / volume fraction of the inert polymer relative to the organic solvent defines the rheological properties of the solution, thus allowing control of the diameter of the filaments obtained. Again, the boiling temperature / vapor pressure of the solvent associated with the temperature of the filament forming process can determine the formation of solid or porous filaments.

Activated surface particulates may be obtained by electrospray, spray drying, emulsions and any other state of the art processes capable of producing particulates. In these cases, the mass / volume fraction of the inert hydrophobic polymer in relation to the organic solvent defines the rheological properties of the solution, allowing the control of the particle size obtained. The boiling temperature / vapor pressure of the solvent associated with the temperature where the process of forming the particulates can determine the formation of solid or porous particles. In the specific case of the emulsions a second solvent is immiscible with the organic solvent employed to make the solution of the inert hydrophobic polymer and the long chain organic compound, this second solvent being usually water. In addition to the second solvent it is also advisable to employ an emulsifying agent which increases the stability of the emulsion formed, the agent being preferably the polyvinyl alcohol.

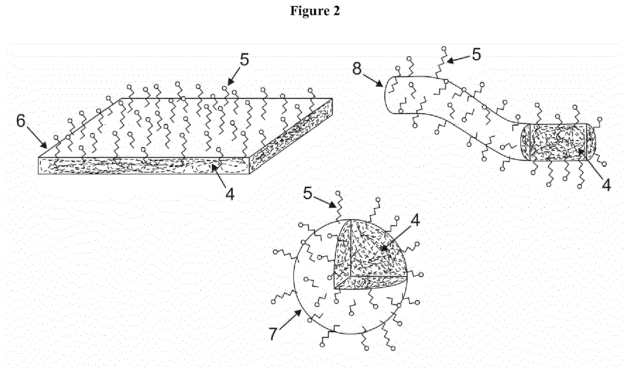

In figure 2 it is possible to visualize the inert (5a) and reactive (5b) terminations in the three types of structures that can be formed (films (6), particles (7) and filaments (8)). The amount of reactive termination present on the surface of the polymeric structures can be adjusted by controlling the mass / volume fraction of the long chain linear organic compound with respect to the polymer used in the preparation of the solution (2). When in solution (2), the linear long chain compound and the polymer should preferably remain in the same phase of the mixture.

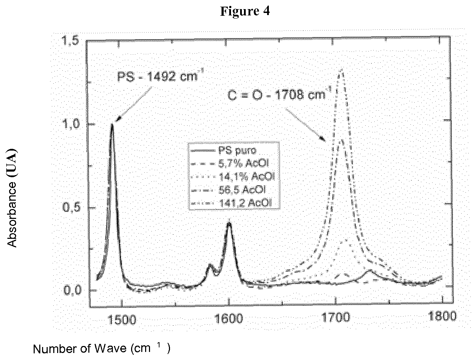

Figure 4 shows the absorption spectra corresponding to each of the mass percentage concentrations of oleic acid employed in the manufacture of the structures of this specific example. Oleic acid (AcOI) in this specific test constituted the long chain linear organic compound. The peak of the carbonyl group (C = O) at 1708 cm'¹ is confirmation that the active end is available at the surface. Note: the higher the material addition in the mixture, the higher the peak height, evidencing a higher degree of activation. Also shown in Figure 4 is the absorption spectrum (FTIR) of pure Polystyrene, which in this specific example consists of the inert hydrophobic polymer constituting the matrix of the structure. All Specters
presented were calibrated in relation to the absorption peak of Polystyrene at 1492 cm'¹ for comparison.

The biological applications of the polymeric materials after the implementation of the claimed method in the capture of biological species or their fractions (9) by chemical bonding of these species to the terminations provided with the surface activation method (10). Examples of biological species (9) are,
preferably, proteins, antigens, antibodies, DNA / RNA, and / or aptamers, in addition to any others available in the prior art.

Chemical applications preferably consist of the capture of chemical species (9) by bonding them to the ends provided by the present surface activation method (10). These organic or inorganic chemical species may be ions, ionic complexes, molecules and / or any combinations thereof.

The following description will depart from preferred embodiments of the invention. As will be apparent to one skilled in the art, the invention is not limited to such embodiments. Example

### 1. Formation of functionalized magnetic microspheres

Various tests were carried out to prepare microspheres (particulates) of polymers using polystyrene / chloroform / nanoparticulate iron oxide (II and III) emulsions <50nm / oleic acid in water and polyvinyl alcohol.

Polystyrene acts as the polymeric substrate, oleic acid as the linear long chain compound and chloroform as the preferred solvent.

Polyvinyl alcohol is used to stabilize the emulsion in water and iron oxide (II or III) nanoparticles permit the formation of paramagnetic microspheres.

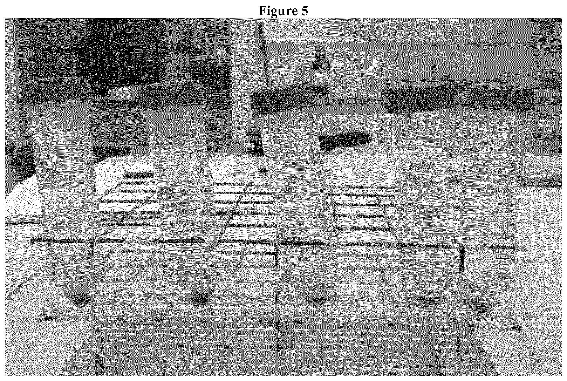

Figure 5 shows sets of microspheres employing the method claimed in the present invention. Each tube contains a few grams of microspheres formed.

The compositions employed in one of the manufacturing tests of the microspheres were:
- 1 liter of water
- 500 milligrams of polyvinyl alcohol
- 1.8 grams of polystyrene
- 18 grams of chloroform
- 5 milligrams of oleic acid
- 150 milligrams of iron oxide

Microspheres formed by employing the method of the present invention may be applied in diagnostics. A diagnosis requires 10,000 spheres (approximately 15 pg of beads).

The description thus far made of the object of the present invention should be considered only as a probable or possible embodiment, and any particular features introduced therein should be understood only as something that has been written to facilitate understanding. Accordingly, they can in no way be considered as limiting the invention, which is limited to the scope of the claims which follow.

## Claims

1. A method of activating the surface of polymeric materials, **characterized in that** it comprises the following steps:
(a) solubilizing at least one hydrophobic polymer and at least one linear long chain organic compound containing an inert hydrophobic termination and a reactive termination in at least one solvent capable of solubilizing the polymer and the organic compound, thereby forming an organic solution;
(b) emulsifying the organic solution with the aid of an emulsification solution, said emulsification solution comprising a second solvent immiscible with the organic solvent, in a temperature range of 35°C to at least 10°C lower than the lower temperature boiling of the emulsion components and stirring for 20 to 40 minutes;
wherein the organic solvent is evaporated during step (b) with consequent physical entrapment of the inert hydrophobic termination of the linear long chain organic compound in the tangled structure of the polymer.

2. Materials surface activation method
The polymer materials according to claim 1, **characterized in that** the polymeric materials can be structured in the form of films, particulates or filaments.

3. Material surface activation method
according to claim 1, **characterized in that** the proportions of the components in the organic solution vary between 5-15% by weight of the inert hydrophobic polymer, 0.1-1% by weight of the linear long chain organic compound and 94,9-84% by weight of solvent.

4. Method of activating the material surface
polymers according to claim 1, **characterized in that** the inert hydrophobic polymer is selected from polystyrene, acrylic, vinyl or polyamide polymers, preferably polystyrene.

5. A method of surface activation of polymeric materials according to claim 1, **characterized in that** the inert hydrophobic termination of the long chain linear organic compound has CH bonds or organic radicals containing such bonds, while its reactive termination has hydroxyl termini (OH), carboxyl (COOH), thiol (SH), amine (NH₂), amide (NH₂O), halogen or combinations thereof.

6. Method of activating the material surface
polymers according to claim 5, **characterized in that** the long chain linear organic compound comprises compounds selected from the group consisting of long chain fatty acids, linear alkanes with diverse halogen termini, linear alkanes with thiol termination, linear alkanes with termination amine, linear amide terminated alkanes, linear alkoxes with epoxy termination and various fatty alcohols.

7. Method of activating the material surface
polymers according to claim 6, **characterized in that** the long chain linear organic compound comprises compounds selected from the group consisting of oleic acid, 2-amino-octanoic acid, anacardic acid, benzenopentanoic acid, benzenopentanol, bromooctane, 1-bromo-decane, 2-bromo-decanoic acid, 1-bromoheptadecane, 1-bromohexadecane, 1-bromooctadecane, 1-bromopentadecane, 1-bromo-tetradecane, 1-bromo-tridecane, decanethiol, 1-decylamine, dodecanoyl chloride, dodecylamine, dodecanamide, 1-dodecanethiol, 1-dodecanol, 1-fluorodecane, 1-iodo-decane, 1-iodo - docecane or 1-iodohexadecane.

8. Method of activating the material surface
according to claim 7, **characterized in that** the long chain linear organic compound is oleic acid.

9. Method of activating the material surface
polymers according to claim 1, **characterized in that** the organic solution further comprises inorganic metal ion nanoparticles.

10. Method of activating the material surface
polymers according to claim 9, **characterized in that** the inorganic nanoparticle is the nanoparticle of iron (II or III) oxide.

11. Method of activating the material surface
polymers according to claim 1, **characterized in that** the emulsification solution comprises water.

12. Method of activating the material surface
polymer emulsions according to claim 1 or 11, **characterized in that** the emulsification solution additionally comprises an emulsion stabilizer.

13. Method of activating the material surface
polymer emulsions according to claim 12, **characterized in that** the emulsion stabilizer is the polyvinyl alcohol.
